(19) Europäisches Patentamt
European Patent Office
Office européen des brevets

(11) EP 1 862 792 A2

(12) **EUROPEAN PATENT APPLICATION**

(43) Date of publication:
**05.12.2007 Bulletin 2007/49**

(51) Int Cl.:
*G01N 21/07* (2006.01) *G01N 21/31* (2006.01)

(21) Application number: **07010590.3**

(22) Date of filing: **29.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **31.05.2006 JP 2006151397**

(71) Applicant: **USHIODENKI KABUSHIKI KAISHA**
**Chiyoda-ku**
**100 Tokyo (JP)**

(72) Inventors:
• **Matsumoto, Shigeki**
**Himeji-shi**
**Hyogo-ken (JP)**
• **Okumura, Yoshihiko**
**Himeji-shi**
**Hyogo-ken (JP)**

(74) Representative: **Tomerius, Isabel et al**
**Lang & Tomerius,**
**Bavariaring 29**
**80336 München (DE)**

(54) **Biochemical analysis device**

(57)     A biochemical analysis device using a microchip in which the base line of the analysis device can be stabilized. The biochemical analysis device has a centrifugal rotor which has a chip holding part for holding a microchip and which is subjected to rotary driving; a light source part; and a light detector, in which the microchip is a microchip in which the centrifugal force act by rotation of the centrifugal rotor and in which pretreatments are performed in which the measurement cell of the microchip is irradiated with light from a light source, the light which has passed through the measurement cell being received in the light detector, and measuring of the light intensity in which the quantity of light absorption by the test liquid is measured within the measurement cell and the test liquid is analyzed, while rotation of the centrifugal rotor is stopped.

Fig. 2

EP 1 862 792 A2

**Description**

Background of the Invention

Field of the Invention

The invention relates to a device for biochemical analysis using a microchip to measure the concentration of a detection object component which is contained in a sample for a biochemical analysis by the process of absorption spectrophotometry or by a nephelometry process. The invention relates especially to a biochemical analysis device using a microchip to measure enzyme activity, such as of γ-GTP (γ-glutamyl-trans-peptidase) and the like in blood, which is required, for example, to diagnose liver function of the human body.

Description of the Prior Art

Recently, an analysis process using a microchip which is called μ-TAS (μ-Total Analysis System)" or "Lab on a chip" has been considered, and using micromachine technology chemical analyses and the like can be carried out with more refinement compared to a conventional device.

In this analysis system using a microchip (hereinafter called "microchip analysis system") effort has been focused on carrying out all processes of the analysis which comprise mixing of the reagent, reaction, separation, extraction and detection by micromachine production technology in an extremely small passage which is formed on a small base surface. This system is used for example for blood analyses in medicine, for analyses of biomolecules such as an ultratrace of protein, nucleic acid and like.

In particular, for example, in the case of blood analysis of man using the microchip analysis system the following and similar advantages can be obtained:

(1) The burden on the patient can be reduced since an extremely small amount of the blood (sample) necessary for the analytic test is sufficient.
(2) Analysis costs can be reduced since only a small amount of reagent which is mixed with the blood and used is sufficient.
(3) Since the device can be made inherently small, analysis can be easily done.

Therefore, the microchip analysis system continues to be developed.

In this microchip analysis system, generally, the process for measuring the concentration of the detection object component in the sample is an absorption spectrophotometry process.

JP-A 2003-279471 and corresponding U.S. Patent Application Publication 2005/140971 disclose, for example, a microchip detection device in which the following steps are performed:

- The reagent is mixed with the sample liquid;
- test liquid (reaction liquid) which was obtained by a reaction of the reagent with the sample liquid and which contains an extinction component is poured into an absorptiometry measurement part which is formed in a passage which is formed in the microchip;
- the absorptiometry measurement part is irradiated with light from the light source and the light which has been transmitted by this absorptiometry measurement part is received in a light detector; and
- based on the absorbance of the light determined hereby with a certain wavelength the concentration of the detection object component in the sample is computed.

In this microchip detection device, for analyses, it is necessary to produce the test liquid for measuring the absorbance beforehand.

U.S. Patent 5,478,750 discloses a blood analysis device in which the following is steps are performed;

- Blood (sample), for example, of roughly 100 microliters is injected into a rotor in which a passage and the like is formed;
- this rotor is attached in the main part of the device and turned, by which centrifugal force which acts on the rotor is used;
- in the rotor itself treatments are performed which comprise, for example, mixing with the reagent and reaction, and in this way, test liquid is produced.
- the test liquid which has been transported to a measurement part is irradiated with flashes of light to measure the absorbance while the rotor continues to turn.

The inventors placed a microchip on a biochemical analysis device according to the process described in the above described U.S. Patent 5,478,750, i.e., on a centrifugal rotor which is driven by rotation; this microchip holds a sample internally using centrifugal force which acts by the rotation of the centrifugal rotor, treatments are carried out within the microchip which comprise mixing with the reagent and reaction, in this way, a test liquid is produced, thus, a biochemical analysis device is experimentally produced in which the centrifugal rotor is turned, and moreover, the absorbance of the test liquid is measured, and analysis is performed for that sample which has been analyzed with a large universal analysis device and which already has an analysis result, using the experimentally produced biochemical analysis device. An exact analysis result could not be obtained, in other words, a result could not obtained which is essentially identical to the already obtained analysis result (hereinafter called "fixed value").

The data output part was considered in which the light received by the light detector is converted into a voltage, the rotational speed of the centrifugal rotor and the irradiation time during which the measurement part is irradiated with the light from the light source part are suitably altered and analysis is done. In this way, the reason for the above described result is checked. This indicated that the longer the irradiation time with the light, the closer the fixed value is approached, i.e., the less the frequency - reaction rate of the circuit which converts the light received by the light detector into a voltage follows the rotational speed (time for irradiation of the measurement part with light).

Since the amount of test liquid which is analyzed and checked with the microchip is, for example, roughly 10 microliters, for example, per measurement cell, therefore, extremely small, a measurement cell often has a very narrow configuration in which its cross-sectional diameter (inside diameter) is, for example, less than or equal to 1 mm and in which the ratio between its cross section and its length exceeds, for example, 1:10. In such an arrangement, the amount of light which passes through the measurement cell is extremely small so that measurement of the absorbance with high precision is difficult.

As means for taking a measurement of the absorbance with high precision, it can be assumed that, for example, the intensity of the light which passes through the measurement cell is increased. If it is sufficient that simply light with high intensity can be transmitted using, for example, laser light can be considered. Since the laser light is monochrome light, a single component can be analyzed. In the case of analyzing several different detection object components, light with several different wavelengths which correspond to the detection object components cannot be obtained. Therefore, it cannot be used.

For this reason, it is necessary to use, for example, a discharge lamp with a continuous spectrum.

In the case of the arrangement of a discharge lamp such that high output wattage is obtained, increasing the distance between the electrodes can be considered. However, there is the disadvantage that, due to the reduction of radiance at an increased distance between the electrodes, the magnitude of the lamp wattage must be limited and that, in this case, the amount of light passing through the measurement cell is reduced.

As was described above, in an analysis device in which the light intensity is measured by rotating a centrifugal rotor, the amount of light delivered into the measurement cell is inevitably reduced so that the gain of the amplifier must be increased on the light detector side.

However, if the gain of the amplifier on the light detector side is increased, due to the above described disadvantage of the frequency reaction of the photoelectric conversion circuit, an exact analysis result cannot be obtained.

Furthermore, in a biochemical analysis device, it is important for propagation to be able not only to measure, but to increase the measurement accuracy.

In particular, for test samples in which the difference between standard values and anomalous values is small, it is necessary to analyze with high precision because the results thereof have an effect on the diagnoses of the test individuals.

In the case, for example, ofγ-GTP, which is becoming the yardstick in the diagnosis of liver function, the normal value range is, for example, 15 U/l to 751 U/1. In this region, the amount of change of absorbance which takes place in the course of a reaction is small, it being necessary to determine an extremely small fluctuation (amount of change). Therefore, there is a need for an analysis device with high stability in which the fluctuation of the base line is suppressed. The concept "fluctuation of the base line of the analysis device" is defined as the stability of the data which are obtained in a measurement of the light for measurement in the light detector in the state in which the detection object (test liquid) is not present in the measurement cell.

It is stated that currently the accuracy necessary for a biochemical analysis device of the portable type must have a CV value (coefficient of variation) of at most 10%.

As was described above, in an analysis device using a microchip, in reality, the target analysis cannot be carried out either with high precision or high reliability by an analysis process in which the light intensity is measured with residual rotation of a centrifugal rotor.

Summary of the Invention

The invention was devised to eliminate the above described disadvantages of the prior art. Thus, a primary object of the present invention is to devise a biochemical analysis device using a microchip in which the base line of the analysis device can be stabilized and in which analysis with high precision is possible without a large biochemical analysis device being better.

The above described object is achieved in accordance with the invention in a biochemical analysis device which comprises the following:

- a centrifugal rotor which has a chip holding part for holding a microchip which has a measurement cell which holds the test liquid and which is subjected to rotary driving;
- a light source part which irradiates the measurement cell of the microchip which is held in the centrifugal rotor with light; and
- a light detector for receiving the light which has passed through the measurement cell,

in which the microchip is a microchip in which the centrifugal force which acts by rotation of the centrifugal rotor is used and in which pretreatments are performed which comprise a separate treatment for centrifugal separation of the sample, a mix and reaction treatment in which the sample liquid which is obtained by this separate treatment is weighed out and this sample liquid is mixed with reagent and caused to react, and transport treatment in which the test liquid obtained by the mix and reaction treatment is transported to the measurement cell, in that the measurement cell of the microchip which is held in the above described chip holding part is irradiated with light from the light source, that the light which has passed through the measurement cell is received in the light detector and that the process of measuring the light intensity in which the quantity of light absorption by the test liquid is measured within the measurement cell and the test liquid is analyzed, is carried out in the state in which rotation of the centrifugal rotor has stopped.

The object is furthermore achieved in accordance with the invention in a biochemical analysis device in that light is emitted from the above described light source from one side in the direction of the axis of rotation of the centrifugal rotor in the direction perpendicular to the measurement cell of the microchip which is held in the above described chip holding part, and that the light which has passed through the measurement cell and which has emerged from the other side of the centrifugal rotor is received by the light detector.

Furthermore, the object is also achieved in accordance with the invention in a biochemical analysis device in that a driving source for rotational driving of the centrifugal rotor is coupled to a coding device, that the entire pulse number P per rotation of this coding device is set such that the relation of the following formula is satisfied:

$$1/10 > [r \cdot \tan (360^{\circ}/P)]/D$$

where r [mm] is the distance between the middle of the axis of rotation of the centrifugal rotor and the middle of the measurement cell of the microchip which is held by the centrifugal rotor and D [mm] is the diameter of the aperture for delivering light which limits the quantity of light such that the beam diameter of the light from the light source is limited to a beam diameter of the light which has finally been delivered into the measurement cell, and that rotation of the centrifugal rotor is stopped during the process of light intensity measurement based on a signal from this coding device.

Furthermore, the object is achieved in accordance with the invention in a biochemical analysis device in that as the microchip several measurement cells are attached, that as the reagent which is mixed with the sample liquid which is obtained by centrifugal separation of the sample, several types are used and that analysis of several types of detection object components which differ from one another is enabled.

In this biochemical analysis device, the chip holding part of the centrifugal rotor is formed in the outer peripheral region of the centrifugal rotor. The microchip is a microchip in which, in the state held by the chip holding part, several measurement cells are attached at a distance from one another so that they are located on the same circular periphery around the center of the axis of rotation of the above described centrifugal rotor.

The test liquid in each measurement cell in the microchip can be analyzed by successively changing the stop position of this centrifugal rotor.

Furthermore, the object is achieved in accordance with the invention in a biochemical analysis device in that the light detector can measure light with several wavelengths at the same time and that the reference light with a wavelength outside the measurement light is measured to analyze the detection object component in the test liquid simultaneously with the measurement light with respect to its light intensity. In this arrangement, the measurement light is light with one of the twelve wavelengths of 340 nm, 405 nm, 450 nm, 480 nm, 505 nm, 546 nm, 570 nm, 600 nm, 660 nm, 700 nm, 750 nm, and 800 nm ($\pm$ 10 nm) and the reference light is light with a wavelength outside of the wavelength selected for the measurement light.

Action of the Invention

The biochemical analysis device in accordance with the invention carries out the process of light intensity measurement in the state in which the centrifugal rotor is stopped. In this way, the amount of light incident in the measurement cell of the microchip can be adequately ensured so that although the measurement cell is irradiated with light which does not have sufficient intensity, the absorbance can be measured with high precision and thus high analysis accuracy can be obtained.

Furthermore, in executing the process of light intensity measurement by controlling the stop position of the centrifugal rotor which holds the microchip, based on the signal of a coding device in which the pulse number has been set such that a certain ratio is satisfied, the stop position of the measurement cell in the microchip can be controlled with high precision, and moreover, with high reproducibility. Therefore, a sufficient amount of light required for measuring the absorbance can be reliably delivered into the measurement cell. As a result, the base line of the analysis device can be stabilized in the state in which the fluctuation width is small and high measurement accuracy can be ensured. Accordingly, high analysis accuracy can be obtained in which the CV value is, for example, less than or equal to 10 %.

The invention is further described below with reference to the accompanying drawings.

Brief Description of the Drawings

Figure 1 is a perspective of the arrangement of one example of a biochemical analysis device in accordance with the invention;

Figure 2 is a schematic top plan view of the biochemical analysis device shown in Figure 1 with the top of the housing removed to show the inner structure;

Figure 3 is a cross-sectional view of the arrangement of a measurement part of the biochemical analysis device as shown in Figure 2;

Figure 4 is an enlarged cross-sectional view of the arrangement of the measurement part for representation of the process of setting the number of pulses of the coding device;

Figure 5 is an enlarged cross-sectional view of the arrangement of the measurement part for representation of the process of setting the number of pulses of the coding device;

Figure 6(A) is a schematic top view of the arrangement of one example of the microchip which is used in the biochemical analysis device in accordance with the invention,

Figure 6(B) is a schematic cross-sectional view of the arrangement of an example of the microchip which is used in the biochemical analysis device in accordance with the invention,

Figure 7 is a flow chart of operation of the biochemical analysis device in accordance with the invention, and

Figure 8 is a time line of the operation of pretreatment in the biochemical analysis device in accordance with the invention.

Detailed Description of the Invention

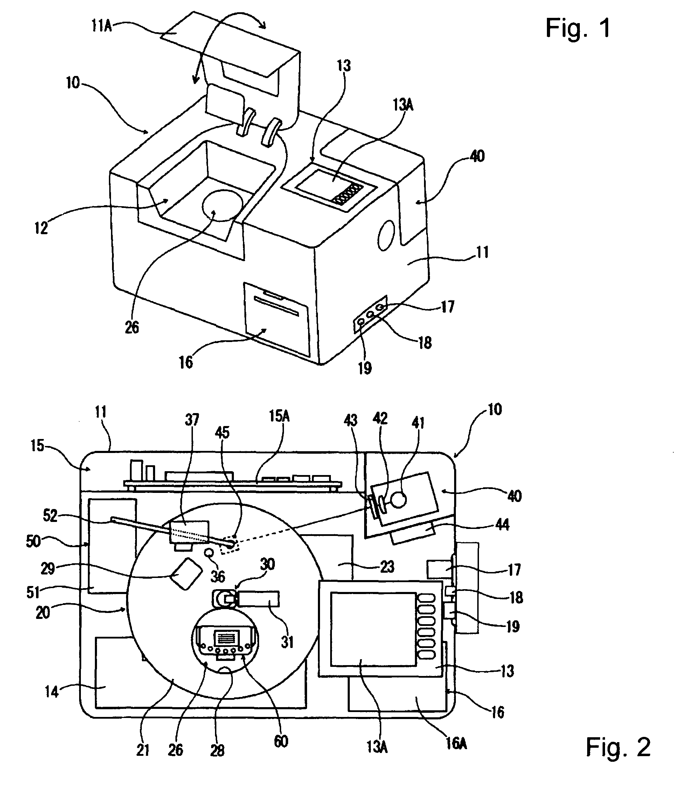

With reference to Figures 1-3, a biochemical analysis device 10 in accordance with the invention is shown which is used for analytic testing and biochemical analysis of a sample, such as, for example blood (or serum or plasma) or the like, using a microchip 60. the device 10 has a housing 11, for example, with an overall box shape in which a measurement part 20 is centrally located. A light source 40 is located to the right behind the measurement part 20. On the left side of the measurement part 20, there is a light detector 50. Behind the measurement part 20, there is a control element 15 which has a CPU board 15A in which functional elements, such as a signal processing circuit and the like, are attached. At the front, underneath the measurement part 20, there is a current source part 14. Furthermore, there is an output part 16 which has a printer 16A which is located at one location next to the current source part 14 in the widthwise direction.

The housing 11 has a cover 11A which has an upper wall region which is opposite the measurement part 20 and of a front wall region bordering it, and which opens a chip insertion part 12 by being pivoted around an axis which runs in the widthwise direction. At the position next to the cover 11A in the widthwise direction, on the top side of the housing 11, is the operator panel 13 which has a display panel part 13A. Figures 1 & 2 also show a current source input terminal 17, a current source switch 18 and a data output terminal 19.

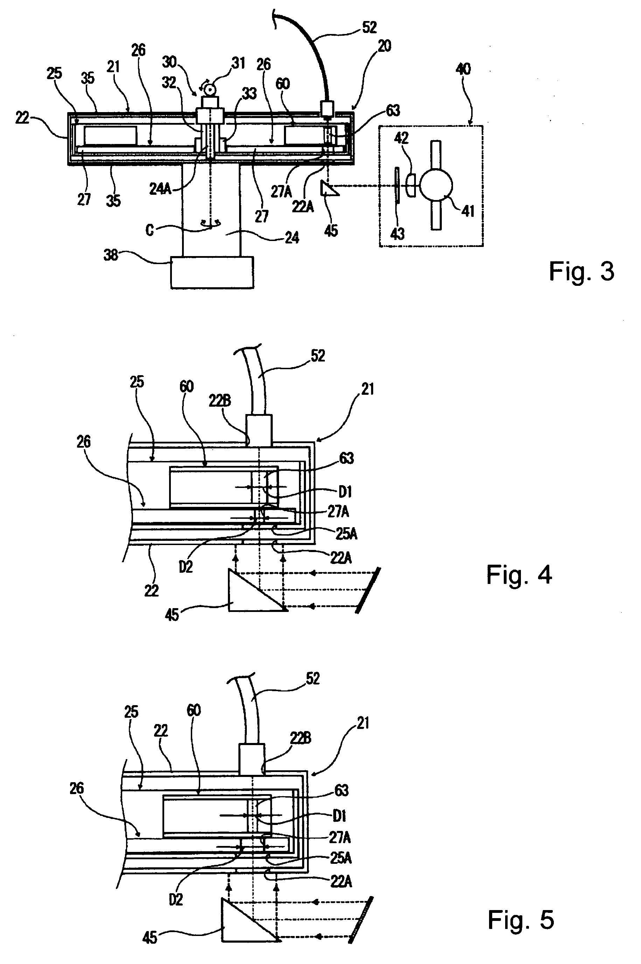

The measurement part 20, as is shown in Figure 3, for example, has a measurement chamber 21 in a hollow cylindrical cover hood 22 in which, for example, a cylindrical closed centrifugal rotor with a chip holding part 26 for holding the microchip 60 is located coaxially, and a motor 24 for centrifuging which is located in the position in which a drive shaft 24A penetrates the middle position of the lower side of a centrifugal rotor 25 and runs in the vertical direction (to the top and bottom). The centrifugal rotor 25 is rotationally driven by driving a motor 24 having a motor driver 23 (Figure 2).

On the bottom wall of the centrifugal rotor 25 is a direction reversing gear 27 with an outer diameter which is smaller than the radius of the centrifugal rotor 25 and which is supported to be able to rotate around an axis which is parallel to the center C of the axis of rotation of the centrifugal rotor 25. On the top side of this gear 27, there is a suitable holder component comprising the chip holding part 26 which is positioned on the outer peripheral edge of the centrifugal rotor 25.

The measurement part 20 can have several chip holding parts 26. In this embodiment, the chip holding parts 26 are formed from direction reversing gears 27 with the same arrangement at opposite positions between which the middle C of the axis of rotation is located in order to maintain the concentric running-balancing of the centrifugal rotor 25 in the proper state.

On the lower wall of the cover hood 22, in the centrifugal rotor 25 and in the direction reversing gear 27 comprising the chip holding part 26, in the state in which the microchip 60 is held fast in the chip holding part 26, at the positions in the radial direction in which a measurement cell 63 of the microchip 60 is positioned, apertures are formed for feeding light 22A, 25A (see, Figures 4 & 5) and 27A from the light source 40 into the measurement cell 63 of the microchip 60. In the upper wall of the cover hood 22, an aperture 22B is formed through which the light which has passed through the measurement cell 63 of the microchip 60 is fed into the light detector 50, and in which, for example, an optical fiber 52 is attached.

On the upper side and the lower side of the cover hood 22, there is partially a flat heating apparatus 35 for maintaining the temperature within the measurement chamber 21 for analytic testing, for example, at a constant temperature of 37 °C. The output is controlled based on the temperature determined, for example, using a thermistor 36.

Furthermore, on the upper wall of the cover hood 22, a window 29 for reading bar codes is formed and is used to read information by means of a bar code reader 37 located above the measurement chamber 21, this information being indicated, for example, by a bar code 65 which is located in the chip insertion opening 28 and in the microchip 60, and this information being characteristic of the microchip 60.

The measurement part 20 of the biochemical analysis device 10 has a chip direction reversal device 30 which forms a rotary driving device which is independent of the driving device which drives the centrifugal rotor 25 in rotation for adjusting the position of the microchip 60 held in the chip holding part 26. This chip direction reversal device 30 comprises a driving gear 33 which engages the direction reversing gear 27 of the chip holding part 26 and which is pivotally located with respect to the drive shaft 24A of the centrifugal motor 24, for example, over a ball bearing 32 or the like, and of a chip direction reversal motor 31 as a driving source for rotary driving of this driving gear 33.

As is described below, in the biochemical analysis device 10 in accordance with the invention, the operation of measurement of the light intensity of the test liquid within the measurement cell 63 of the microchip 60 is carried out in the state in which rotation of the centrifugal rotor 25 is stopped. It is therefore necessary to adjust the stop position of the centrifugal rotor 25 with high precision. Therefore, a coder 38 is coupled to the centrifugal motor 24 for rotational driving of the centrifugal rotor 25. For light intensity measurement operation, the stop position of the centrifugal rotor 25 is adjusted based on the signal from the encoder 38.

It is advantageous for the total pulse number P per rotation of the encoder 38 to be set such that the following relation is satisfied. In this way, for light intensity measurement operation, deviation of the stop position of the measurement cell 63 can be reduced to a negligible amount, i.e., high reproducibility can be obtained and the required measurement precision can be reliably maintained.

As is shown, for example, in Figure 4, the total pulse number P per revolution of the encoder 38 is set such that the relation satisfies the following formula;

$$(\text{Formula}) \qquad 1/10 > [r \cdot \tan(360^{o}/P)]/D2$$

where r [mm] is the distance between the center C of the axis of rotation of the centrifugal rotor 25 and the center of the measurement cell 63 in the radial direction of the microchip 60 which is seated on the centrifugal rotor 25 and D [mm] is the diameter of the aperture for feeding light which limits the amount of light such that the beam diameter of the light from the light source 40 is limited to the beam diameter of the light which is finally fed into the measurement cell 63 (in this example, D2 is the diameter of the aperture 27A for light feed which is formed in the direction reversing gear 27). The beam diameter of the light from the light source 40 is, in any case, greater than the minimum value D1 of the cross sectional diameter (dimension of inside diameter) of the measurement cell 63 of the microchip 60 and also the diameter D2 of the aperture 27A for light feeding of the direction reversing gear 27.

Furthermore, as is shown in Figure 5, the total pulse number P per revolution of the encoder 38 is set such that the relation satisfies the following formula;

(Formula)                              $1/10 > [r \cdot \tan(360^{\circ}/P)]/D1$

if D=D1, the amount of light is limited by the outer peripheral edge of the measurement cell 63 of the microchip 60 such that the beam diameter of the light from the light source 40 is limited to the beam diameter of the light which is finally fed into the measurement cell 63.

The light source 40 in this biochemical analysis device 10 consists of the light source 41 of a discharge lamp which emits light in the wavelength range of UV radiation to the IR region, a lens 42 for making parallel the light emitted from the light source 41 and for its emission, and an optical filter 43. Furthermore, an air cooling fan 44 is provided for cooling the discharge lamp during lamp operation. For example, a xenon lamp, a mercury lamp, a halogen lamp with a high color temperature or the like can be used as the discharge lamp of the light source 41.

In this biochemical analysis device 10, for example, there is a reflection mirror 45 opposite the light feed opening 22A of the cover hood 22 of the measurement chamber 21. The light from the light source 41 is fed from the bottom side of the measurement chamber 21 such that it passes through within the measurement cell 63 of the microchip 60 in the vertical direction.

The light detector 50 has a light receiving apparatus 51 which comprises, for example, a concave diffraction grating photometer with several wavelengths which can measure several wavelengths at the same time. The light which has been transmitted from the inside of the measurement cell 63 is fed into the light receiving apparatus 51, for example, by the optical fiber 25 which is attached to the aperture 22B and which has an end mounted on the upper wall of the cover hood 22.

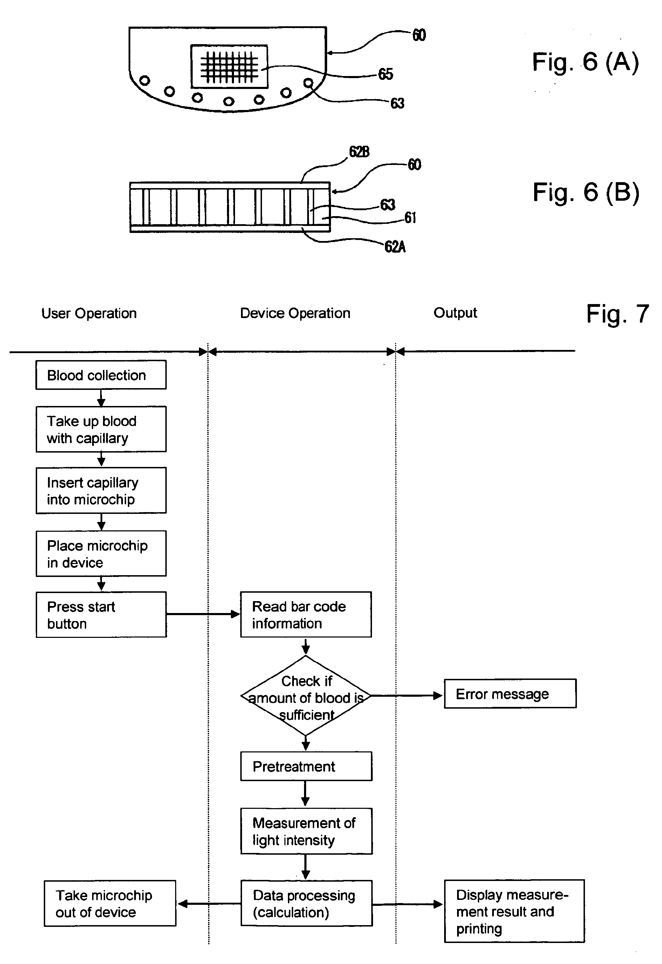

The microchip 60 which is used in the above described biochemical analysis device 10, as is shown, for example, in Figures 6(A) & 6(B), has a flat overall shape with an outside edge region which is curved in an arc shape. A passage is formed extending between a pair of transparent substrates 62A, 62B, at opposite sides of the main chip part 61, in which is located, for example, the measurement cell 63, a separation cell (not shown), a mixing cell (not shown), and a weighing means (not shown).

In this microchip 60 several, for example, seven, measurement cells 63 are formed spaced apart from one another in the state in which the centrifugal rotor 25 is held fast in the chip holding part 26, at positions on the same circle periphery as the center C of the axis of rotation of the centrifugal rotor 25. They each have a narrow shape with an extremely large dimension (length) in the direction of thickness compared to the cross sectional diameter (inside diameter) so that a relatively great length of the optical path of the transmitted light which is required for measurement of the absorbance is ensured.

The arrangement of the measurement cell 63 is shown below using one specific example. For example, the inside diameter is 1 mm, the length is 10 mm and the volume (amount of the test liquid to be tested) is roughly 10 microliters.

In Figures 6(A) & 6(B) for example, a bar code 65 is glued onto the top side of the microchip 60 and by which information is indicated which is characteristic of the microchip 60, such as, for example, measurement stations, measurement processes and the like.

Operation of the above described biochemical analysis device 10 is described below using an example of the analysis of human blood.

As is shown in Figure 7, first of all, blood (sample) which has been taken from a test subject by suction, for example, through a capillary is injected into the microchip 60. By turning the cover 11A of the biochemical analysis device 10 the chip insertion part 12 is opened. The microchip 60 is attached at a position in the chip holding part 26 (actuation of the user) in which, for example, the measurement cells 63 are each located at positions on concentric circles to the middle C of the axis of rotation of the centrifugal rotor 25.

If the biochemical analysis device 10 is operated by pressing a starting button, the information which is characteristic of the microchip 60, such as the measurement conditions and the like, which is indicated by the bar code 65 of the microchip 60, is read by a bar code reader 37. Based on this information, the operating conditions of the biochemical analysis device 10 are set. Moreover, it is assessed whether the amount of blood necessary for analytic measurement which has been injected into the microchip 60 is sufficient, and in the case of a sufficient amount of blood, an analytic test of the blood is run. If it is ascertained that the amount of blood is insufficient, an error message is delivered.

Analytic testing comprises a pretreatment process for producing the test liquid according to the test samples (detection object components) and the process of measuring the light intensity for measuring the absorbance of the test liquids (device process) which were obtained by this pretreatment process.

The pretreatment process is carried out during rotary driving of the centrifugal rotor 25 using centrifugal force which acts on the microchip 60, and comprises the following:

- separate treatment for separating the sample liquid from the sample;
- distribution treatment for dividing the sample liquid into the respective measurement cell 63;

- weighing treatment for metering of a certain amount of sample liquid;
- mix and reaction treatment for mixing of the sample liquid with a reagent, reaction and production of the test liquid; and
- liquid transport treatment for transporting the produced test liquid to the respective measurement cell 63.

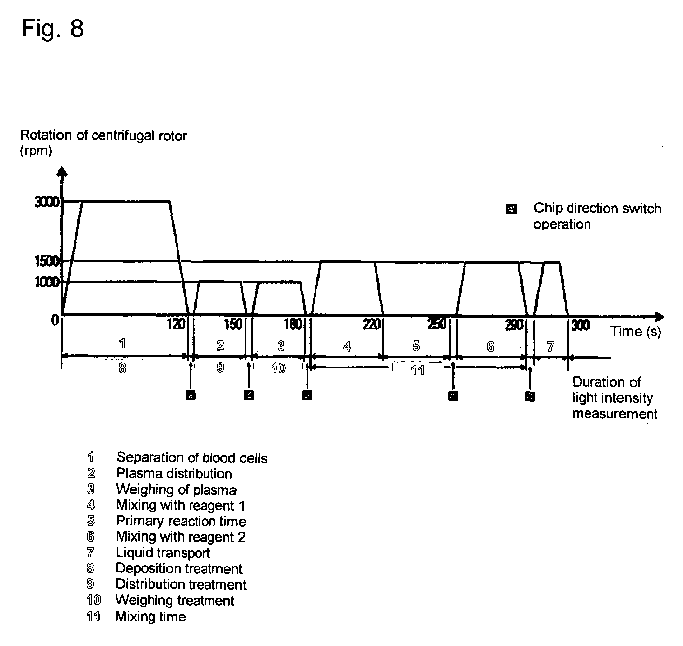

The pretreatment process is described specifically below. As is shown in Figure 8, first, by rotary driving of the centrifugal rotor 25 with a given rpm and by the action of the centrifugal force on the microchip 60 in a divided cell of the microchip 60, separate treatments are performed in which blood cells in the blood (sample) are subjected to centrifugal separation. Afterwards, the chip holding part 26 in the state in which the rotation of the centrifugal rotor 25 is stopped, is turned by the chip direction reversal device 30. Thus, a chip direction reversal process is carried out to adjust the direction (position) of the microchip 60 such that, in the course of rotation of the centrifugal rotor 25, centrifugal force acts in a direction which differs from the direction during the separate treatment.

Next, the plasma (sample liquid) which was obtained by separate treatment flows through the passage from the divided cell to the distribution region by rotary driving of the centrifugal rotor 25 with a given rpm and by the action of centrifugal force. The plasma is divided among the respective measurement cells 63 in the distribution region.

In the state in which the rotation of the centrifugal rotor 25 is stopped, a chip direction reversal process is carried out to change the direction (position) of the microchip 60. Afterwards, the centrifugal rotor 25 is rotationally driven with a given rpm, and the centrifugal force acts, by which the plasma flows through the passage from the distribution region to the weighing region. In the weighing region, weighing treatment is performed for metering of a certain amount of plasma.

Afterwards, in the state in which the rotation of the centrifugal rotor 25 is stopped, a chip direction reversal process is carried out to change the direction (position) of the microchip 60. Afterwards, the centrifugal rotor 25 is rotationally driven with a given rpm, and the centrifugal force acts to cause a certain amount of plasma to flow through the passage from the weighing region to the mixing cell. In the mixing cell, mix and reaction treatment is carried out in which the plasma is mixed with reagent, caused to react and the test liquid (reaction liquid) is produced. In this connection, in the mix and reaction treatment, for example, the plasma can also be mixed with several reagents and reacted. In this case, a given time for the reaction with the premixed reagent can be ensured, a reaction liquid can be produced, the chip direction reversal process can be carried out, and afterwards, the reaction liquid can be mixed with the reagent and caused to react.

Afterwards, in the state in which rotation of the centrifugal rotor 25 is stopped, a chip direction reversal process is carried out to change the direction (position) of the microchip 60. Then, the centrifugal rotor 25 is rotationally driven with a given rpm, and the centrifugal force acts, by which the plasma flows through the passage from the mixing cell to the measurement cell 63, the measurement cell 63 being filled with it.

In the above described processes, for example, in cases of determination of diseases of patients and the like, it is necessary to take measurements at several test samples so that the respective corresponding measurement cell 63 is filled with several test liquids which have been obtained by reactions with different types of reagents. In this embodiment, a microchip 60 with seven measurement cells 63 is used so that analytic measurements with respect to seven test samples can be carried out at the same time.

In the mixing reaction treatment, a reagent can be used which is used in a conventional biochemical analysis device and which is selected according to the target test samples (detection object component).

The respective treatment conditions in pretreatment are described below using one example.

For example:

- the rpm of the centrifugal rotor 25 in separate treatment is 3000 rpm;
- the treatment time is 120 sec;
- the rpm of the centrifugal rotor 25 in distribution treatment is 1000 rpm;
- the treatment time is 30 sec;
- the rpm of the centrifugal rotor 25 in weighing treatment is 1000 rpm;
- the treatment time is 30 sec;
- the rpm of the centrifugal rotor 25 in mix and reaction treatment is 1500 rpm; and
- the treatment time (excluding the reaction time) is 40 sec.

After carrying out the above described series of pretreatments, for each measurement cell 63 which has been filled with the produced test liquid, the light intensity is measured. Positioning is performed, for example, such that light from the light source 40 is fed into the measurement cell which is positioned on the outermost side of the microchip 60 (which is positioned on the right end in Figures 6(A) & 6(B). In the state in which the rotation of the centrifugal rotor 25 is stopped, the light from the light source 41 which is emitted via the lens 42 and the optical fiber 43 is reflected from the reflection mirror 45 and fed from the bottom side of the measurement cell 21 in the direction which is perpendicular to the measurement cell 63. The light which had passed through the test liquid within the measurement cell 63 is fed by the optical fiber 52 into the light receiving apparatus 51. The light receiving apparatus 61 simultaneously determines the amount of light (measurement light) with a certain wavelength which has been established according to the test liquid and the amount of light (reference light) with a wavelength which differs from the wavelength of this measurement light. Based on these amounts of light, the absorbance of the test liquid is measured. In this connection, in a light intensity measurement, the direction (position) of the microchip 60 is changed such that, for example, the respective measurement cell 63 is arranged concentrically to the center C of the axis of rotation of the centrifugal rotor 25.

The data which have been determined by the light detector 61 contain a fluctuation by brief scattering of the light source 41 and a fluctuation by long-term drift of a few dozen minutes to a few hours based on the service life and the thermal properties of the light source 41. In a biochemical analysis, such as, for example, blood analysis or the like, the change of the absorbance during a relatively short time of a few minutes is measured so that, in particular, a fluctuation as a result of brief scattering is regarded as disadvantageous.

However, for example, if a xenon lamp is used as the light source 41, it does not happen that only a certain wavelength fluctuates, but fluctuation takes place essentially in the entire wavelength range with an essentially identical width. In the case of a biochemical analysis for each reagent, the absorption wavelength and wavelengths without absorption are known beforehand. By simultaneous measurement of the amount of light without absorption (reference light) and the amount of measurement light, the fluctuation by brief scattering of the light source 41 which is contained in the data with respect to the measurement light can be balanced (corrected) by data relating to the reference light, and the absorbance of the test liquid within the measurement cell 63 can be measured with high precision.

The light intensity is measured by repeating a process several times in which, for example, for all measurement cells, the light intensity is measured successively, the light intensity measurement during a given time per measurement cell being called the treatment unit. This means that, when the measurement of absorbance per cell is completed, the centrifugal rotor 25 is rotationally driven. By adjusting the amount of motion thereof based on a signal from the encoder 38, positioning control is exercised such that light from the light source 40 is fed into the adjacent measurement cell which is to be subjected to light intensity measurement. Rotation of the centrifugal rotor 25 is stopped. In this state, the light intensity is measured. After such a light intensity measurement has been taken in succession for all measurement cells, for example, starting from the measurement cell which was subject to light intensity measurement first, the light intensity is measured a second time in succession.

By repeating this treatment a given number of times, several data (amount of measurement light and amount of reference light for each light intensity measurement) are acquired.

For the respective measurement cell 63, the absorbance of the measurement light for each light intensity measurement is computed by correction of the fluctuation of the light source 41 1 based on the absorbance of the reference light. Based on this result, the concentration of the detection object which is contained in the test liquid in the measurement cell 63 is computed. This data processing is performed for the test liquid in all measurement cells 63. The result thereof is displayed in a display part 13A, and moreover, is output by the printer 16A.

The treatment conditions of the light intensity measurement are illustrated below using one example. For example:

- the time per treatment unit of a measurement cell is 1 sec.;
- the time which is necessary per light intensity measurement for all seven measurement cells is roughly 15 sec., and
- the light intensity is measured 20 times for one measurement cell.

The measurement light which is used in the light intensity measurement process is one of twelve wavelengths of, for example, 340 nm, 405 nm, 450 nm, 480 nm, 505 nm, 546 nm, 570 nm, 600 nm, 660 nm, 700 nm, 750 nm, and 800 nm ($\pm$ 10 nm) according to the detection object. As reference light, a wavelength outside of the wavelength selected for the measurement light is selected.

In a test of $\gamma$-GTP it is, for example, necessary for the reference light to have a wavelength without absorption by benzoic acid which is produced in the course of a reaction with plasma, and this wavelength should be longer than roughly 500 nm (in the table shown below, 570 nm). Table 1 below shows combinations of the wavelength of the measurement light (main wavelength) to the wavelength of the reference light (secondary wavelength) using a specific example, which correspond to analysis samples (detection object components).

(Table 1)

| Analysis sample (detection object component) | Main wavelength [nm] | Secondary wavelength [nm] |
|---|---|---|
| Alb (albumin) | 600 | 660 |
| LDH (lactic dehydrogenase) | 340 | 405 |
| AST (GOT) | 340 | 546 |

(continued)

| Analysis sample (detection object component) | Main wavelength [nm] | Secondary wavelength [nm] |
|---|---|---|
| ALT (GPT) | 340 | 546 |
| γ-GTP (γ-glutamyl-trans-peptidase) | 405 | 570 |
| ALP (alkali phosphatase) | 405 | 505 |
| T-Cho (total cholesterol) | 600 | 700 |
| HDL-Cho (HDL cholesterol) | 600 | 700 |
| TG (neutral fat) | 600 | 700 |
| Glu (glucose) | 340 | 405 |
| BUN (urea-nitrogen) | 340 | 405 |
| Cre (creatine) | 600 | 700 |
| UA (uric acid) | 600 | 700 |

The biochemical analysis device 10 with the above described arrangement measures the light intensity in the state in which the centrifugal rotor 25 is stopped. In this way, the amount of light which is incident in the measurement cell 63 of the microchip 60 can be adequately ensured so that the absorbance can be measured with high precision and thus high analysis accuracy can be obtained even if the measurement cell 63 is irradiated with light without sufficient intensity.

Furthermore, in light intensity measurement, because the stop position of the centrifugal rotor 25 which holds the microchip 60 fast is adjusted based on the signal from the encoder 38 with a pulse number which is set such that a certain relation is satisfied, the stop position of the measurement cell 63 of the microchip 60 can be adjusted with high precision, and moreover, with high reproducibility, so that an amount of light sufficient for measuring absorbance can be reliably fed into the measurement cell 63. As a result the base line of the analysis device can be stabilized in the state in which the fluctuation width is small. Thus, high measurement precision can be ensured, and therefore, high analysis accuracy with a CV value of, for example, at most 10 % can be obtained.

Therefore, the device is extremely useful for analysis of test samples such as, for example, γ-GTP and the like, for which the difference between the normal value and the anomalous value is small, for which the amount of change of absorbance is small and for which extremely small fluctuations must be determined.

Furthermore, the light detector 50 is made such that light with several wavelengths can be measured at the same time. Because the reference light with wavelengths outside the measurement light for analyzing the detection object component which is contained in the test fluid is measured with the measurement light at the same time with respect to its light intensity, the fluctuation of the amount of light of the light source 41 is corrected and the absorbance is measured. Therefore, the amount of light of the UV radiation is greater than for a conventionally used halogen lamp. It is nearer a point light source than a conventionally used halogen lamp. On the other hand, use of a discharge lamp, such as a xenon lamp with a somewhat lower stability or the like is enabled, by which the fluctuation of the amount of light of the light source can be corrected by the single beam method. As a result, the analysis device can be made smaller and the costs reduced.

One embodiment of the invention was described above; but, the invention is not limited to the above described embodiment, rather various modifications can be made.

In the biochemical analysis device in accordance with the invention, for example, the number of chip holding parts formed in the measurement chamber, the specific arrangement and the directions of rotation of the centrifugal rotor and of the chip holding part and the like as well as the respective treatment condition in the analytic measurement are not especially limited, but suitable changes can be made according to the purpose.

In the above described embodiment, an arrangement was described in which the measurement cell of the microchip which is held by the above described chip holding part is irradiated with light from the light source from one side in the direction of the axis of rotation of the centrifugal rotor and the test liquid in the measurement cell is subjected to light intensity measurement. However, the measurement cell of the microchip can also be irradiated with light from the light source from the direction perpendicular to the axis of rotation of the centrifugal rotor (transverse direction to the centrifugal rotor).

Furthermore, the specific arrangement of the microchip used in the biochemical analysis device in accordance with the invention, such as, for example, the number of measurement cells and the like, is not limited to the above described embodiment.

**Claims**

1. Biochemical analysis device, comprising:

    - a rotationally mounted centrifugal rotor which has a chip holding part for holding a microchip which has a measurement cell for holding a test liquid;
    - a light source part for irradiating the measurement cell of the microchip which is held by the centrifugal rotor with light; and
    - a light detector for receiving light which has passed through the measurement cell,

    in which the microchip for executing pretreatments of a sample under the action of the centrifugal force which is produced by rotation of the centrifugal rotor, which pretreatments comprise a separate treatment for centrifugal separation of the sample, a mix and reaction treatment in which the amount of a sample liquid which has been obtained by the separate treatment is determined, and the sample liquid is mixed with reagent and caused to react, and transport treatment in which the test liquid obtained by the mix and reaction treatment is transported to the measurement cell,
    wherein the light detector measures a quantity of absorption of the light which has passed through the test liquid within the measurement cell in a state in which rotation of the centrifugal rotor is stopped.

2. Biochemical analysis device in accordance with claim 1, wherein the light source part is positioned to emit light in a direction of an axis of rotation of the centrifugal rotor and perpendicular to the measurement cell of the microchip.

3. Biochemical analysis device in accordance with claim 2, wherein a driving source for rotation of the centrifugal rotor is coupled to a coding device, with a total pulse number P per rotation which is set such that the following relation

$$1/10 > [r \cdot \tan(360^{o}/P)]/D$$

    is satisfied, in which r [mm] is the distance between the middle of the axis of rotation of the centrifugal rotor and the middle of the measurement cell of the microchip which is held by the centrifugal rotor and D [mm] is the diameter of the aperture for delivering the light which limits the quantity of light such that the beam diameter of the light from the light source is limited to the beam diameter of the light which has finally been delivered into the measurement cell, and
    wherein the coding device is made to stop rotation of the centrifugal rotor for light intensity measurement.

4. Biochemical analysis device in accordance with any one of claims 1 to 3, wherein there are a plurality of measurement cells in the microchip for holding different reagents to be mixed with the sample liquid which has been obtained by centrifugal separation of the sample for detecting plural detection object components.

5. Biochemical analysis device in accordance with claim 4, wherein the chip holding part is formed in an outer peripheral edge region of the centrifugal rotor, wherein the measurement cells of the microchip are located at a distance from one another so that they are located on the same circular periphery about the center of the axis of rotation of the centrifugal rotor.

6. Biochemical analysis device in accordance with any one of claims 1 to 5, wherein the light detector is made to measure measurement light of several wavelengths and to measure reference light with a wavelength outside of the wavelengths of the measurement light at the same time as the light of several wavelengths to analyze the detection object component in the test liquid with respect to its light intensity.

7. Biochemical analysis device in accordance with claim 6, wherein the measurement light has wavelengths selected from 340 nm, 405 nm, 450 nm, 480 nm, 505 nm, 546 nm, 570 nm, 600 nm, 660 nm, 700 nm, 750 nm, and 800 nm $\pm$ 10 nm.

8. Process for carrying out biochemical analysis of a sample with an analysis device which comprises the steps of:

    - holding a microchip which has a measurement cell for holding a test liquid on a chip holding part of a rotationally mounted centrifugal rotor;

- providing a light source part for irradiating the measurement cell of the microchip which is held by the centrifugal rotor with light; and
- providing a light detector for receiving light which has passed through the measurement cell,
- carrying out pretreatments using centrifugal force which is produced by rotation of the centrifugal rotor and which comprise the following:
- a separate treatment for centrifugal separation of the sample,
- a mix and reaction treatment in which an amount of sample liquid which has been obtained by the separate treatment is determined and the sample liquid is mixed with reagent and caused to react, and
- a transport treatment in which test liquid obtained by the mix and reaction treatment is transported to the measurement cell,

wherein the measurement cell of the microchip which is held in the chip holding part is irradiated with light from the light source, light which has passed through the measurement cell is received in the light detector and measuring of the light intensity in which the quantity of light absorption by the test liquid is measured within the measurement cell and the test liquid is analyzed, is carried out while rotation of the centrifugal rotor is stopped.

Fig. 1

Fig. 2

Fig. 3

Fig. 4

Fig. 5

Fig. 6 (A)

Fig. 6 (B)

Fig. 7

| User Operation | Device Operation | Output |
|---|---|---|

Blood collection

Take up blood with capillary

Insert capillary into microchip

Place microchip in device

Press start button → Read bar code information

Check if amount of blood is sufficient → Error message

Pretreatment

Measurement of light intensity

Take microchip out of device ← Data processing (calculation) → Display measurement result and printing

15

# Fig. 8

Rotation of centrifugal rotor (rpm)

■ Chip direction switch operation

Duration of light intensity measurement

1   Separation of blood cells
2   Plasma distribution
3   Weighing of plasma
4   Mixing with reagent 1
5   Primary reaction time
6   Mixing with reagent 2
7   Liquid transport
8   Deposition treatment
9   Distribution treatment
10   Weighing treatment
11   Mixing time

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003279471 A
- US 2005140971 A

- US 5478750 A